# EUROPÄISCHE PATENTSCHRIFT

(11) **EP 0 711 313 B1**
(45) Veröffentlichungstag und Bekanntmachung des Hinweises auf die Patenterteilung: **26.08.1998**
(21) Anmeldenummer: 94920919.1
(22) Anmeldetag: 09.06.1994
(51) Int. Cl.: C08G 18/00, C04B 26/16, C08K 3/36, C08K 3/34

(54) **ISOCYANAT/POLYOL-REAKTIONSHARZ**
ISOCYANATE/POLYOL REACTION RESIN
RESINE COMPOSITE ISOCYANATE/POLYOL

(30) Priorität: 18.06.1993 DE 4320269; 18.06.1993 DE 4320118; 16.03.1994 WO PCT/EP94/00835
(43) Veröffentlichungstag der Anmeldung: 15.05.1996
(73) Patentinhaber: Henkel Kommanditgesellschaft auf Aktien, 40191 Düsseldorf (DE)
(72) Erfinder: THIELE, Lothar, D-42799 Leichlingen (DE); KOHLSTADT, Hans-Peter, D-42549 Velbert (DE); SCHLINGLOFF, Nicole, D-40724 Hilden (DE); PLUTNIOK, Claudia, D-40239 Düsseldorf (DE)
(86) Internationale Anmeldenummer: EP9401889
(87) Internationale Veröffentlichungsnummer: WO9500568

(56) Entgegenhaltungen:
- EP-A- 0 002 513
- DE-A- 3 339 174
- FR-A- 2 098 310
- FR-A- 2 123 056
- FR-A- 2 295 829
- FR-A- 2 673 210
- JP-A-52 101 270
- JP-A-57 029 704
- DATABASE WPI Section Ch, Week 8213, Derwent Publications Ltd., London, GB; Class A03, AN 82-24769E & JP,A,57 029 704 (ASAHI DENKA KOGYO) 17. Februar 1982
- DATABASE WPI Section Ch, Week 7740, Derwent Publications Ltd., London, GB; Class A08, AN 77-71546Y & JP,A,52 101 270 (GIJUTSU I.G. KENKYUS.) 25. August 1977

## Beschreibung

Die Erfindung betrifft ein Isocyanat/Polyol-Reaktionsharz sowie seine Verwendung als Bindemittel für körniges Material zur Herstellung von offenporigen Formteilen.

Offenporige Formteile, z.B. aus Kieselsteinen, sind bekannt. So wurden in der Zeitschrift "ADAC Motorwelt" im Heft 2 von 1993 auf den Seiten 6, 7 und 8 Pflastersteine beschrieben, die den Regen durchlassen. Insbesondere wird dort über einen "Filterstein" aus zusammengesetzten kleinen Kieselsteinen berichtet, der wie ein durchlässiger Schwamm Regenwasser genau dort versickern läßt, wo es fällt. Er eignet sich nicht nur für Parkplätze, sondern auch für Geh- und Radwege.

Es sind auch offenporige Formteile aus duromerem Polyurethan als Bindemittel für ein Kies/Sandgemisch bekannt. So wird in der EP 468 608 ein Entwässerungselement für den Brunnenausbau beschrieben. Es besteht im wesentlichen aus 20 bis 30 Gew.-Teilen eines definierten Zuschlagstoffes und 1 Gew.-Teil eines Bindemittels auf Polyurethan-Basis. Als Zuschlagstoff wird Filterkies im Fraktionsbereich 1 bis 4 mm eingesetzt. Die Aushärtung erfolgt bei 80 °C in Gegenwart eines Katalysators. Nachteilig ist, daß der Sandanteil mit einem Durchmesser von weniger als 1 mm entfernt werden muß. Außerdem ist die Aushärtung bei 80 °C zu langwierig und damit zu unwirtschaftlich. Schließlich ist die Verteilung des Polyurethan-Bindemittels ungleichmäßig. Besonders schädlich ist, daß sich "Nester" von unbenetzten feinen Anteilen bilden, worunter die Festigkeit leidet.

FR-A-2 098 310 beschreibt eine elastische Oberflächenschicht mit einer Dicke von bis zu etwa 50,8 mm, dadurch gekennzeichnet, daß sie (a) 1 Gewichtsteil eines in situ aus einem Polyisocyanat und einem Polyol hergestellten Polyurethan, wobei das Polyol zu mindestens 50 Gew.-% aus einem Diol mit einem Molekulargewicht von 1000 bis 5000 besteht und das Polyisocyanat in einem Äquivalentverhältnis von 0,8 bis 1,50 Isocyanatgruppen auf eine Hydroxylgruppe des Polyols verwendet wird, (b) 0,6 bis 4,5 Gewichtsteile eines Verdünnungsöls mit einem Anilinpunkt im Bereich zwischen etwa 23,9°C und 54°C und einer Viskosität von etwa 200 bis 6000 SUS bei 37,8°C, (c) etwa 0,25 bis etwa 4,5 Teile elastischen Zuschlagstoff, wobei der elastische Zuschlagstoff eine maximale Abmessung von bis zu etwa 25,4 mm aufweist und durch ein Sieb mit einer lichten Maschenweite von 6,73 mm hindurchgeht, (d) 0 bis etwa 1,8 Teile mineralischen Füllstoff mit einer Teilchengröße im Bereich von 0,84 mm lichte Maschenweite bis Staubkorngröße, (e) 0 bis etwa 0,5 Teile Trocknungsmittel oder dessen hydratisierte Form, (f) 0 bis etwa 0,5 Teile eines Polyurethankatalysators, und (g) 0,08 bis etwa 0,45 Teile Ruß enthält, wobei das Verdünnungsöl in einer Menge von etwa 12 bis etwa 60 Gew.-% bezogen zur das Gesamtgemisch anwesend ist und das Polyurethan in einer Menge von etwa 5 bis etwa 35 Gew.-% des Gesamtgemisches anwesend ist.

In der WO 92/18702 werden flüssigkeitsdurchlässige Elemente beschrieben, die durch Verbindung von mehreren stützkörperfreien Segmenten mit einem Gießelastomeren hergestellt werden. Die Segmente bestehen aus einem Kies-Polyurethan-Gießharz-Gemisch. Die Kornfraktion besteht aus Teilen mit 2 bis 8 bzw. 2 bis 4 mm Durchmesser. Der Bindemittelanteil betrug 5 Gew.-%.

Die Firma Laubag beschreibt in ihrem Firmenprospekt "Öko-Filter" einen druckfesten Kiesfilter ohne Stützkörper, der aus einem Polyurethan-Bindemittel und einem Quarzsandgemisch der Kornklasse 1 bis 4 mm hergestellt wird. Er zeichnet sich durch folgende Vorteile aus: hohe Wasserdurchlässigkeit, langlebige Brunnensäule, ausgezeichnete Filterwirkung, geeignet bis zu 200 m Teufe und hohe mechanische Festigkeit, insbesondere hohe Schlagzähigkeit. Zu der Herstellung des Kiesfilters und insbesondere zu dem verwendeten Polyurethan-Bindemittel wird nichts gesagt.

In der DE 40 23 005 wird ein der Erfindung nahestehendes Polyurethan-System beschrieben, das sich z.B. für den Filterbau, zum Einsatz von Scheiben in Fensterprofile und zur Herstellung von Sandwich-Bauteilen eignet. Die Polyolkomponente enthält 15 bis 100 Gew.-% an Polyol, 0 bis 85 Gew.-% an Füllstoff, 0 bis 5 Gew.-% an Trockenmittel wie Zeolith, 0 bis 2 Gew.-% an Verdickungsmittel, 0 bis 2 Gew.-% an sonstigen Hilfsstoffen, z.B. Farbstoffe oder Katalysatoren und 1 bis 10 Gew.-% eines Thixotropiermittels aus einer Mischung von Polyamidamin mit einem niedermolekularen mehrfunktionellen Amin.

Ausgehend von diesem Stand der Technik sollte ein Bindemittel für körniges Material gefunden werden, welches eine einfache und sichere Herstellung von Formteilen erlaubt, die offenporig sind und eine hohe mechanische Festigkeit haben, sowie insbesondere nicht toxisch sind.

Die erfindungsgemäße Lösung ist den Patentansprüchen zu entnehmen. Sie besteht im wesentlichen in der Auswahl eines bestimmten Isocyanat/Polyol-Reaktivharzes auf der Basis folgender Komponenten:
a) Polyol,
b) Polyisocyanat,
c) Katalysator,
d) bis zu 10 Gew.-%, bezogen auf das Polyol an Suspendierhilfsmittel und
e) bis zu 10 Gew.-% eines Mittels zur Bindung von Wasser, bezogen auf das Polyol,
dadurch gekennzeichnet, daß der Katalysator und das Suspendierhilfsmittel in solcher Konzentration im Reaktionsharz enthalten sind, daß es unmittelbar nach dem Vermischen innerhalb von 10 Min.
a) bei 25 °C um mindestens 15 cm und
b) bei 130 °C um 3 bis 0,3 cm, vozugsweise 2 bis 0,6 cm und insbesondere 1 cm nach unten fließt,
wenn man das Isocyanat/Polyol-Reaktionsharz nach Vermischung sofort mit einem Rakel als 10 cm langen rechteckigen Streifen mit einer Höhe von 1 mm und einer Breite von 1 cm auf ein entfettetes Stahlblech aufbringt, welches auf die Aushärtungstemperatur vortemperiert wurde, und wenn man unmittelbar nach Auftrag die Probe senkrecht in einen Trockenschrank stellt, so daß der Reaktionsharzstreifen sich in waagerechter Lage befindet.

Dadurch wird erreicht, daß die Viskosität des Reaktivharzes einerseits bei Raumtemperatur unter Rühren so niedrig ist, daß körniges Material gut benetzt wird, und andererseits bei einer Temperaturerhöhung ohne Rühren so hoch ist, daß ein Film in senkrechter Stellung nicht nach unten fließt. Bei seiner Aushärtung entsteht ein duromeres Polyurethan.

Prinzipiell sind alle Polyole, die bereits zur Polyurethanherstellung bekannt sind, auch für die vorliegende Erfindung geeignet. In Betracht kommen insbesondere die an sich bekannten Polyhydroxy-Polyether des Molekulargewichtsbereiches von 60 bis 10 000, vorzugsweise 70 bis 6 000, mit 2 bis 10 Hydroxylgruppen pro Molekül. Derartige Polyhydroxypolyether werden in an sich bekannter Weise durch Alkoxylierung von geeigneten Startermolekülen erhalten, z.B. von Wasser, Propylenglykol, Glycerin, Trimethylolpropan, Sorbit, Rohrzucker usw.. Geeignete Alkoxylierungsmittel sind insbesondere Propylenoxid und eventuell auch Ethylenoxid. Ein anderer Polyhydroxy-Polyethertyp sind die durch Ringöffnungspolymerisation hergestellten Polytetrahydrofurane.

Es kommen aber auch die üblichen Polyester-Polyole des Molekulargewichts-Bereiches von 400 bis 10 000 in Frage, wenn sie 2 bis 6 Hydroxylgruppen enthalten. Das ist besonders dann der Fall, wenn es auf eine hervorragende Stabilität gegen Licht- und Wärmeeinwirkung ankommt. Geeignete Polyester-Polyole sind die an sich bekannten Umsetzungsprodukte von überschüssigen Mengen an mehrwertigen Alkoholen der als Startermoleküle bereits beispielhaft genannten Art mit mehrbasischen Säuren, wie beispielsweise Bernsteinsäure, Adipinsäure, Phthalsäure, Terephthalsäure oder beliebigen Gemischen derartiger Säuren. Verwendet werden können auch Ester und Partialester von gesättigten und ungesättigten Fettsäuren mit Polyhydroxyverbindungen sowie deren ethoxylierten oder propoxylierte Derivate. Bevorzugt wird ein Polyesterdiol aus Hexandiol und Adipinsäure. Schließlich können auch Prepolymere mit OH-Gruppen eingesetzt werden, also Oligomere aus Polyisocyanaten und Polyolen in starkem Überschuß, sowie Polyole auf Basis von Polycarbonaten, Polycaprolactonen und hydroxylterminierten Polybutadienen.

Als Polyisocyanate sind alle mehrwertigen aromatischen und aliphatischen Isocyanate geeignet. Vorzugsweise enthalten sie im Mittel 2 bis höchstens 4 NCO-Gruppen. Beispielsweise seien als geeignete Isocyanate genannt: 1,5-Naphthylendiisocyanat, 4,4'-Diphenylmethandiisocyanat (MDI), hydriertes MDI (H₁₂NDI), Xylylendiisocyanat (XDI), Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), gegebenenfalls in Mischung, 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester. Weitere wichtige Diisocyanate sind Trimethylhexamethylendiisocyanat, 1,4-Diisocyanatobutan, 1,12-Diisocyanatododecan und Dimerfettsäure-diisocyanat. Interesse verdienen trimerisierte Isocyanate und Isocyanatbiurete sowie teilweise verkappte Polyisocyanate, welche die Bildung selbstvernetzender Polyurethane ermöglichen, z.B. dimeres Toluylendiisocyanat. Schließlich können auch Prepolymere eingesetzt werden, also Oligomere mit mehreren Isocyanatgruppen. Sie werden bekanntlich bei einem großen Überschuß von monomerem Polyisocyanat in Gegenwart von z.B. Diolen erhalten. Im allgemeinen werden aromatische Isocyanate bevorzugt eingesetzt.

Bevorzugt werden die Polyole und Polyisocyanate als Zweikomponenten-Gießharz eingesetzt, wobei ein niedermolekulares Polyisocyanat und ein gleichfalls verhältnismäßig niedermolekulares Polyol erst kurz vor ihrer Verwendung gemischt werden. Das Polyisocyanat wird mit einem bis zu 50 %igem Überschuß an Isocyanat, bezogen auf das Polyol eingesetzt, vorzugsweise mit einem 10 bis 30 %igem Überschuß.

Als Katalysatoren werden hochwirksame tertiäre Amine oder Amidine und metallorganische Verbindungen verwendet sowie deren Mischung. Als Amine kommen sowohl acyclische als auch insbesondere cyclische Verbindungen in Frage. Konkret seien genannt:
Tetramethylbutandiamin, 1,4-Diaza-bicyclooctan (DABCO), 1,8-Diazabicyclo-(5.4.0)-undecen.
Als metallorganische Verbindungen kommen sowohl Eisen- als auch insbesondere Zinn-Verbindungen in Frage. Konkrete Eisenverbindungen sind: 1,3-Dicarbonyl-Verbindungen des Eisen wie Eisen(III)acetylacetonat.
Als Katalysatoren werden insbesondere zinnorganische Verbindungen eingesetzt. Darunter werden Verbindungen verstanden, die sowohl Zinn als auch einen organischen Rest enthalten, insbesondere Verbindungen, die eine oder mehrere Sn-C-Bindungen enthalten. Zu den organischen Verbindungen im weiteren Sinne zählen z.B. auch Salze wie Zinn(II)octoat und Zinn(II)stearat. Zu den Zinnverbindungen im engeren Sinne gehören vor allem Verbindungen des vierwertigen Zinns der allgemeinen Formel Rₙ₊₁SnX₃₋ₙ, wobei n eine Zahl von 0 bis 2 ist, R eine Alkyl-, Aryl-, Alkaryl- und/oder Aralkylgruppe, die neben den C- und H-Atomen auch noch 0-Atome enthalten können, insbesondere in Form von Keto- oder Ester-Gruppen, darstellt und X schlieBlich eine Sauerstoff-, Schwefel- oder Stickstoffverbindung bedeutet. Die Gruppen R oder X können auch miteinander verbunden sein und dann zusammen mit dem Zinn einen Ring bilden. Solche Verbindungen sind in den Schriften EP 491 268, EP 490 277, EP 423 643 beschrieben. Zweckmäßigerweise enthält R mindestens 4 C-Atome, insbesondere mindestens 8. Die Obergrenze liegt in der Regel bei 12 C-Atomen. Vorzugsweise ist n = 0 oder 1 sowie eine Mischung von 1 und 0. Vorzugsweise ist X eine Sauerstoff-Verbindung, also ein zinnorganisches Oxid, Hydroxid, Alkoholat, β-Dicarbonylverbindung, Carboxylat oder Salz anorganischer Säuren. X kann aber auch eine Schwefel-Verbindung sein, also ein zinnorganisches Sulfid, Thiolat oder Thiosäureester. Bei den Sn-S-Verbindungen sind vor allem Thioglykolsäureester interessant, z.B. Verbindungen mit folgenden Resten:

- S - CH₂ - CH₂ - CO - O -(CH₂)₁₀ CH₃

oder

- S - CH₂ - CH₂ - CO - O - CH₂ - CH(C₂H₅) - CH₂ - CH₂ - CH₂ - CH₃.

Derartige Verbindungen erfüllen eine weitere Auswahlregel: Das Molekulargewicht der zinnorganischen Verbindung soll vorzugsweise über 250, insbesondere über 600 liegen.

Eine bevorzugte Verbindungsklasse stellen die Dialkyl-Zinn(IV)Carboxylate dar (X = O - CO - R¹). Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie insbesondere 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(β-methoxycarbonyl-ethyl)zinndilaurat und Bis(β-acetyl-ethyl)zinndilaurat.

Auch Zinnoxide und -sulfide sowie -thiolate sind bevorzugt brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(β-methoxycarbonylethyl)zinndidodecylthiolat, Bis(β-acetyl-ethyl)zinn-bis(2-ethylhexylthiolat), Dibutyl- und Dioctylzinndidodecylthiolat, Butyl- und Octylzinn-tris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2-ethylhexoat) mit der allgemeinen Formel Rₙ₊₁Sn(SCH₂CH₂OCOC₈H₁₇)₃₋ₙ, wobei R eine Alkylgruppe mit 4 bis 8 C-Atomen ist, Bis(β-methoxycarbonyl-ethyl)zinn-bis(thioethylenglykol-2-ethylhexoat), -zinn-bis(thioglykolsäure-2-ethylhexoat), und Bis(β-acetyl-ethyl)zinn-bis(thioethylenglykol-2-ethylhexoat) und zinn-bis(thioglykolsäure-2-ethylhexoat.

Aus den übrigen angeführten Gruppen der Zinnverbindungen seien genannt:
Tributylzinnhydroxid, Dibutylzinndiethylat, Dibutylzinndibutylat, Dihexylzinndihexylat, Dibutylzinndiacetylacetonat, Dibutylzinndiethyl-acetylacetat, Bis(butyldichlorzinn)oxid, Bis(dibutylchlorzinn)sulfid, Dibutyl- und Dioctylzinndichlorid, Dibutyl- und Dioctylzinndithioacetat.

Der Katalysator wird vorzugsweise dem Polyol zugesetzt. Seine Menge richtet sich nach seiner Aktivität und den Reaktionsbedingungen. Sie liegt vorzugsweise im Bereich von 0,01 bis 0,5 Gew.-%, bezogen auf das Polyol.

Das Suspendierhilfsmittel dient vor allem dazu, den Staub und die Füllstoffe in dem Isocyanat/Polyol-Reaktionsharz zu stabilisieren. Dazu ist zunächst deren Benetzung sehr wichtig. Außerdem soll das Absetzen der Teilchen verhindert werden. Im engen Zusammenhang damit steht der Thixotropiereffekt des Isocyanat/Polyol-Reaktionsharzes: Beim Mischen mit dem körnigen Material und beim Gießen in die Formen soll es möglichst dünnflüssig sein. Sobald jedoch die äußeren Kräfte nachlassen, soll es möglichst zähflüssig sein, damit es in den Formen nicht nach unten fließt.

Konkrete Stoffe, die diese Aufgaben lösen, sind
- Bentonite, also verunreinigte Tone, die durch Verwitterung vulkanischer Tuffe entstanden sind, insbesondere "Bentone",
- hochdisperse Kieselsäure, also eine Kieselsäure mit über 99,8 Gew.-% an SiO₂, die durch Hydrolyse von Siliciumtetrachlorid in einer Knallgasflamme hergestellt wurde, insbesondere "Aerosil",
- ein Gemisch aus a) Kieselsäure und b) Dimethylsulfoxid, Polyoxyalkylenglykol und dessen Derivate, insbesondere mit Siloxan-Endgruppen, oder Polyethylenfasern, insbesondere Gemische aus amorpher Kieselsäure und fibrilierte Polyethylenfasern (Sylothix-53),
- gehärtetes Ricinusöl, allein oder zusammen mit Ethylen-bis-stearamid bzw. Bis(stearproyl-palmitoyl)ethylendiamin (Hoechst-Wachs-C),
- oberflächenbehandeltes Calciumcarbonat.

Außerdem seien genannt: LiCl, Mischungen aus Polyamidamin und niedermolekularen Aminen (s. DE 40 23 005), feinverteilte Polyharnstoffe aus aliphatischen oder aromatischen Polyaminen und Isocyanaten.

Das Suspendierhilfsmittel wird in einer Menge von bis zu 10 Gew.-% eingesetzt, insbesondere von 0,5 bis 5 %, bezogen auf das Polyol. Mit Vergrößerung des Staubanteils des Kies/Sandgemisches ist auch seine Menge zu vergrößern. Dies führt sowohl zu einer besseren Benetzung des Staubes als auch zu einer besseren Bindung des Staubes im nicht ausgehärteten sowie im ausgehärteten Gemisch aus Isocyanat/Polyol-Reaktionsharz und körnigem Material. Daher wird sowohl der Staubanteil in der Luft als auch die Lagerstabilität der Formteile im Wasser verbessert. Das Suspendierhilfsmittel wird ebenfalls vorzugsweise dem Polyol zugesetzt.

Daneben kann das Isocyanat/Polyol-Reaktionsharz auch noch weitere Additive enthalten. Dazu zählen in erster Linie die Füllstoffe. Sie dienen nicht nur dazu, das Volumen zu vergrößern, sondern auch zur Verbesserung von technischen Eigenschaften, insbesondere des Fließverhaltens. Als Füllstoffe eignen sich Carbonate, insbesondere Kalkspat, Kalkstein, Kreide und gecoatetes Calciumcarbonat und Magnesium/Calcium-Carbonat-Doppelsalze wie Dolomit, Sulfate wie Barium- und Calciumsulfat, Oxide und Hydroxide wie Aluminiumoxid, Aluminiumoxidhydrate, Silikate wie Kaolin, Feldspat, Wallostonit, Glimmer, Ton und Talkum sowie Siliciumdioxid (Quarzmehl), Kieselgur, Graphit oder Glas-fasern. Die Füllstoffe werden ebenfalls vorzugsweise der Polyolkomponente zugesetzt, und zwar in einer Menge von bis zu 70 Gew.-%, vorzugsweise 10 bis 60 Gew.-%, bezogen auf die Harzkomponente.

Dem Polyol wird auch ein Mittel zur Bindung von Wasser zugesetzt, insbesondere Alkali-Aluminium-Silikate (Zeolith-L-Paste). Ihr Anteil beträgt bis zu 10 Gew.-%, vorzugsweise 1 bis 5 Gew.-%, bezogen auf das Polyol.

Das Polyol kann auch spezielle Additive wie Dispersionsmittel, Verdickungsmittel oder Thixotropiermittel enthalten, falls das Suspensionshilfsmittel diesbezüglich unbefriedigende Eigenschaften aufweist.

Als weitere Additive kommen in Frage:
Pigmente z.B. Ruß, Flammschutzmittel, Stabilisatoren und Haftvermittler.

Je nach den konkreten Anwendungen kann es angebracht sein, das Polyurethan gegen Abbau zu stabilisieren. Als Antioxidantien eignen sich insbesondere bis zu 1,5 Gew.-% an Irganox 1010, 1076, 3114 und 1425 der Firma Ciba Geigy, Topanol 0 der Firma ICI, und Goodrite 3114 der Firma Goodrich.
Als UV-Absorber eignen sich insbesondere bis zu 1,5 Gew.-% an Tinuvin P, 328 und 144 (Ciba Geigy), Sanduvor VSU und 3035 (Sandoz), Chimassorb 81 der Firma Chimosa.
Als sterisch gehinderte Lichtstabilisatoren auf Aminbasis kommen bis zu 1,5 Gew.-% an Tinuvin 765 und 770 der Firma Ciba Geigy, Sanduvor 3050, 3051 und 3052 der Firma Sandoz und Chimassorb 119 der Firma Chimosa sowie Mar LA 62, 63, 67 und 68 der Firma Argus Chemical Corporation in Frage.

Die Additive werden auf bekannte Art und Weise in das Polyol eingemischt. Man erhält auf diese Art und Weise das sogenannte Harz. Auch dem Polyisocyanat können Additive zugesetzt werden. Jedoch ist es nicht üblich, d.h., der Härter besteht vorzugsweise aus dem Polyisocyanat.

Natürlich können auch mehrere Polyole, Polyisocyanate, Katalysatoren, Suspendierhilfsmittel und Additive gleicher Funktion eingesetzt werden.

Das Isocyanat/Polyol-Reaktionsharz wird als organisches Bindemittel anstelle der sonst üblichen anorganischen Bindemittel verwendet, z.B. anstelle von Zement. Der Zuschlagstoff sowie die Zusätze sind analog zu denen, die im Baustoffbereich üblich sind.
Als Zuschlag dienen körnige Materialien, insbesondere Mineralien. Es handelt sich dabei um gebrochene und/oder ungebrochene Gesteinskörper. Ihre chemische Zusammensetzung ist neben den Kornmerkmalen von untergeordneter Bedeutung. Es kann sich um Stoffe wie Siliciumdioxid, Silikate, Kohle, Kalkstein, Korund, SiCarbid, Metalle, massive oder hohle Kugeln aus Glas oder Kunststoff, Blähton, Vermiculit, Perlit, Bimskies oder Schlacken handeln. Bevorzugt wird Siliciumdioxid in Form von Sand und Kies. Insbesondere ist Quarzsand geeignet, der zu über 85 % aus Quarz besteht. Seine Körnchen sind weitgehend abgerundet und haben einen Durchmesser von 0,06 bis 2 mm. Entsprechende Materialien mit einem Durchmesser von mehr als 2 mm werden als Kies bezeichnet. Für den vorliegenden Fall ist der Feinkies mit einer Korngröße von 2 bis 6,3 mm von besonderer Bedeutung.

Vorzugsweise wird ein Kies/Sandgemisch eingesetzt, dessen Teile einen max. Durchmesser von 6,3, vorzugsweise 4 mm haben. Entscheidend für das erfindungsgemäße Verfahren ist, daß auch körnige Materialien mit einem Durchmesser unter 1 mm verwendet werden können, und zwar mit einem Gewichtsanteil bis zu 10 Gew.-%. Davon kann die Hälfte einen Durchmesser von weniger als 0,2 mm haben. Es ist also möglich, ein Kies/Sandgemisch mit einem Staubanteil von 5 Gew.-% zu verwenden. Die KorngröBenverteilung wird auf bekannte Weise durch Siebanalyse bestimmt.

Ein hoher Anteil an Fein- und Mittelsand verringert allerdings die Durchlässigkeit für Wasser. Durch Variation des Anteils läßt sich gezielt die Wasserdurchlässigkeit einstellen. Ein Formteil aus einer Mischung von 2 Sandfraktionen mit einem Durchmesser von 0,20 bis 1,0 und 1,0 bis 2,0 im Verhältnis 1 : 1 ergibt bei Verarbeitung mit dem Reaktionsharz ein praktisch wasserundurchlässiges Formteil. Der Staubanteil kann auch bereits als Füllstoff in das Isocyanat/Polyol-Reaktionsharz eingearbeitet sein.

Bei geeigneter Korngrößenverteilung braucht also das ursprüngliche Kies/Sandgemisch nur gewaschen zu werden, um z.B. alle organischen und alle quellbaren Bestandteile zu entfernen. Ein Absieben der Staubanteile ist unter Umständen nicht notwendig. Das gewaschene Kies/Sandgemisch wird mit heißer Luft getrocknet und schließlich in Silos unter üblichen Umweltbedingungen gelagert. Vorzugsweise wird das Kies/Sandgemisch jedoch noch vor der Lagerung mit einem Teil des Polyols gemischt, insbesondere wenn das Gemisch einen hohen Staubanteil hat. Das Polyol kann auch noch weitere Komponenten enthalten wie Füllstoffe, Suspendierhilfsmittel und Katalysator. Diese Vorbehandlung führt zu einer vollständigen Benetzung des Kies/ Sand/Staub-Gemisches und damit zu einer vollständigen Ummantelung der einzelnen Partikel. Dadurch wird nicht nur der Staubanteil in der Luft während der Herstellung der Formteile verringert, sondern auch die Stabilität der Formteile gegenüber Wasser bei deren Lagerung erhöht.

Das Gewichtsverhältnis von Quarzsand : Polyurethan-Bindemittel beträgt vorzugsweise weniger als 20 : 1, insbesondere gleich oder weniger als 16 : 1. Bei einer Körnung zwischen 1,6 und 4,0 mm sind für Filter mit einer Wasserflußrate von 0 m³/min · m² gleiche Gewichtsanteile an Quarzsand und Bindemittel erforderlich. Bei einem Sand mit einer Körnung bis zu 4 mm, jedoch mit 20 Gew.-% an Teilchen unter 1,6 mm - bezogen auf die Gesamtmenge des Sandes - verringert sich der Bindemittelanteil für gleichen Filtertyp auf ca. 10 Gew.-%, bezogen auf den Sand insgesamt.

Als Zusatz kommen ähnliche Produkte in Frage wie z.B. beim Beton, um bestimmte zusätzliche Effekte zu erreichen, z.B. Pigmente zur Anfärbung, Glasfasern zur Verstärkung und scharfkantige Materialien zur Rutschfestausrüstung.

Aus dem Isocyanat/Polyol-Reaktionsharz und den körnigen Materialien so wie gegebenenfalls weiteren Zusätzen werden die offenporigen Formteile hergestellt, und zwar im Prinzip nach dem Gießverfahren.

Dazu werden zunächst die beiden Komponenten des Isocyanat/Polyol-Reaktionsharzes dosiert und gemischt, nämlich das Polyol zusammen mit dem Katalysator, dem Suspendierhilfsmittel und gegebenenfalls Additiven als erste Komponente und dem Polyisocyanat als zweite Komponente.

In der Regel werden dann diese Isocyanat/Polyol-Reaktionsharze sowie das körnige Material und gegebenenfalls weitere Zusätze bei Raumtemperatur dosiert und gemischt, bis die festen Bestandteile von dem Harz benetzt sind. Diese Formmasse wird dann drucklos unter Rütteln in die Form mit den gewünschten Dimensionen gegossen. Bei länglichen Formen kann es vorteilhaft sein, einen Druck von z.B. 15 N/cm² anzuwenden. Zusätzlich kann zur Verstärkung ein Vlies, ein Geflecht oder eine Matte aus Glas oder Metall eingelegt werden. Es ist auch möglich, oberflächlich eine Schicht aus dekorativem Material aufzubringen, z.B. weiße Kieselsteine. Es ist ebenfalls möglich, eine Schicht aus Aktivkohle-Granulat einzubauen, um eine Sperrschicht in dem Formteil zu erhalten. Die Formen werden in der Regel nicht vorgewärmt. Sie sind mit einem handelsüblichen Trennmittel versehen.

Zur Härtung werden die Formen mit ihrem Inhalt auf 80 bis 150 °C erwärmt, was z.B. in einem Umluftofen geschehen kann. Die Erwärmung kann bis zu 2 Stunden dauern, vorzugsweise bis zu einer Stunde, insbesondere bis zu 10 Min.. Dabei beginnt die Erwärmzeit mit dem Einfüllen der Formmasse in die Formen und endet mit dem Entformen.

Zweckmäßigerweise wird vor dem Entformen nicht auf 25 °C abgekühlt, vorzugsweise nicht auf 50, insbesondere überhaupt nicht, d.h., es wird praktisch bei der Reaktionstemperatur entformt. Entformt wird, wenn kein flüchtiges Isocyanat mehr vorhanden ist und die Formteile soweit gehärtet sind, daß sie sich ohne Schwierigkeit handhaben lassen. Dazu zählt nicht nur das Entformen, sondern auch der Transport, die Lagerung und gegebenenfalls eine Nachbearbeitung der Formteile. Die Festigkeiten der Formteile nehmen noch innerhalb eines Tages merklich zu. Diese Nachhärtungszeit hängt von der Lagertemperatur, von der Feuchtigkeit (Luftfeuchtigkeit, flüssiges Wasser) und den Dimensionen des Formteils ab.

Bei den Formen handelt es sich um Dauerformen. Sie brauchen nicht jedes Mal nach ihrer Benutzung gereinigt zu werden, sondern vielmehr erst nach ca. 10- oder gar nach 20facher Benutzung.

Die Anlage zur Herstellung der Formteile ist vorzugsweise für ein kontinuierliches halbautomatisches Chargen-Verfahren ausgelegt.

Die so hergestellten Formteile haben hervorragende Eigenschaften, die vor allem auf dem Polyurethan-Bindemittel und seiner Verteilung in dem körnigen Material beruhen.

Das Polyurethan-Bindemittel ist gegenüber Wasser praktisch inert. Die Wasserqualität wird auch nach 7tägiger Kontaktzeit nicht beeinflußt. Das gilt nicht nur für die Farbe, den Geruch, die Klarheit und die Oberflächenspannung des Wassers, sondern vor allem auch für seinen Gehalt an Aminen. Die Formteile eignen sich daher als Ausrüstungsgegenstände zur Trinkwassergewinnung.

Das Polyurethan-Bindemittel ist in dem körnigen Material so verteilt, daß ein Porensystem entsteht. Das Porenvolumen beträgt bis zu 60 Vol.-%, vorzugsweise 30 bis 50 Vol.-%, berechnet als Volumen der Poren, bezogen auf das Volumen der Formteile. Dementsprechend sind die Formteile um etwa bis zur Hälfte leichter als entsprechend dimensionierte kompakte Formteile mit Zement als Bindemittel. Auch die Wärmeleitfähigkeit wird durch die Poren reduziert.

Das Porensystem ist offen, d.h., die Formteile sind permeabel. Sie lassen Gase und Flüssigkeiten durch, z.B. flüssiges oder gasförmiges Wasser, Luft oder polare Flüssigkeiten. Die Wasserdurchlässigkeit ist einstellbar. Sie kann praktisch 0 sein oder aber hoch, und zwar schon bei geringem oder gar keinem Druck, so daß Wasser ohne Stauungen versickern kann.

Die Wasserdurchlässigkeit kann gezielt durch geeignete Wahl der KorngröBe und Korngrößenverteilung variiert werden. Das gilt sowohl bezüglich der Porenvolumen insgesamt als auch bezüglich der Porengrößenverteilung über den Querschnitt des Formteils. Solch ein asymmetrisches Porensystem läßt sich aufbauen, indem man z.B. auf eine Schicht aus mittelkörnigem Material (1 bis 3 mm) eine zweite Schicht aus grobkörnigem Material 3 bis 10 mm aufbringt. Eine Schicht mit kleinkörnigem Material (0,3 bis 1,0 mm) darf nur sehr dünn sein, damit die Durchlässigkeit nicht praktisch auf 0 reduziert wird.

Durch die gleichmäßige Verteilung des PUR-Bindemittels im körnigen Material werden gute mechanische Eigenschaften erzielt. Die Festigkeit der Formvorteile ist für ein organisches Bindemittel erstaunlich günstig. Das gilt sowohl für die Druckfestigkeit und Zugfestigkeit als auch für die Biegefestigkeit. Die Schlagzähigkeit ist außerordentlich hoch. Falls diese Werte für spezielle Einsatzgebiete nicht ausreichen sollten, lassen sie sich durch Verstärkungsmittel noch erhöhen. Die hohen Festigkeitswerte können durch Auswahl geeigneter Ausgangsstoffe und durch Zusatz von Stabilisatoren über Jahre weitgehend konstant gehalten werden. So läßt sich z.B. die Hydrolysestabilität durch Verwendung eines Polyether-Polyols anstatt eines Polyester-Polyols wesentlich verbessern.

Aufgrund dieser wertvollen Eigenschaften der offenporigen Formteile eignen sie sich sowohl für Einsatzgebiete, in denen ein Permeat drucklos entfernt werden soll, z.B. Wasser durch Versickern, als auch für Einsatzgebiete, in denen das Formteil unter hohem Druck steht, z.B. bei einem tiefen Brunnen.

### Beispiele

Die Erfindung wird nun im einzelnen an Hand eines Beispieles beschrieben:

### Beispiel 1

Das Isocyanat/Polyol-Reaktionsharzgemisch wird aus den beiden Komponenten Polyol mit Additiven (Harz) und Isocyanat (Härter) hergestellt. Die Polyolkomponente setzt sich zusammen aus 33 Gew.-% Polypropylendiol und 10 Gew.-% Polyethertriol, 10 Gew.-% Zeolith-Paste, 45 % Kreide, 1,6 % an pyrogener Kieselsäure sowie weniger als 1 % an Dibutylzinndilaurat.
3 Gew.-Teile dieses Harzes werden mit 1 Gew.-Teil des Polyisocyanats Diphenylmethan-4,4-diisocyanat mit einer Funktionalität von 2,7 bei Raumtemperatur mit einem dynamischen Mischer gemischt. Man erhält so das Isocyanat/Polyol-Reaktivharz.
Aus 1 Gew.-Teil dieses Isocyanat/Polyol-Reaktionsharzes und 16 Gew.-Teilen eines Kies/Sandgemisches wird die Füllmasse durch Mischen bei Raumtemperatur unter Rütteln hergestellt. Das Kies/Sandgemisch enthält 95 Gew.-% an Partikeln mit einem Durchmesser von 1 bis 4 mm und 5 Gew.-% an Partikeln mit einem Durchmesser von < 1 mm.

Die Füllmasse wird bei Raumtemperatur unter Rütteln in die Form gegossen, die mit einem Teflonspray beschichtet ist. Zusätzlich wird ein definierter Druck angewendet.
Die Härtung erfolgt bei 140 °C in ca. 10 Min. in einem Umluftofen. Nach dem Abkühlen auf Raumtemperatur wird entformt.

### Beispiel 2

### Variation der Härtungstemperatur bei 2 Rührgeschwindigkeiten

### A) Isocyanat/Polyol-Reaktionsharz

| a) Harzkomponente | Masseanteile in Gew.-% |
|---|---|
| Polypropylenglykol, OHZ ca. 280, difunktionell | 13,00 |
| Polypropylenglykol, OHZ ca. 240, difunktionell | 28,00 |
| Rizinusöl | 5,00 |
| Na-Al-Silicat in Rizinusöl (1:1-Mischung) | 6,00 |
| Kieselsäure (Aerosil 150) | 2,00 |
| Dibutylzinndilaurat | 0,02 |
| Kalksteinmehl | 45,98 |
| | |

| b) Härterkomponente | |
|---|---|
| Diphenylmethan-4,4,'-diisocyanat | 100,00 |
| Mischungsverhältnis Harz : Härter | 100 : 30 |

200 g Harz und 60 g Härter werden mit einem elektrisch betriebenen Metallflügelrührer (Flügelbreite 4 cm) in einer Blechdose von 10 cm Durchmesser 1 Minute bei Raumtemperatur (23 °C) vermischt und anschlieBend bei unterschiedlichen Temperaturen ausgehärtet.

Das Isocyanat/Polyol-Reaktionsharz wird nach Vermischung sofort mit einem Rakel als 10 cm langer rechteckiger Streifen mit einer Höhe von 1 mm und einer Breite von 1 cm auf ein entfettetes Stahlblech aufgebracht. Dieses Blech ist auf die Aushärtungstemperatur vortemperiert und wird unmittelbar nach Auftrag senkrecht in einen Trockenschrank gestellt, so daß der Reaktionsharzstreifen sich in waagerechter Lage befindet. Nach 10 Minuten Aushärtezeit bei den in den folgenden Tabellen angegebenen Temperaturen wird das Ablaufen des Reaktionsharzes bestimmt.

Es folgt die Herstellung von 2 Vergleichsproben entsprechend der angegebenen Rezeptur, die sich nur dadurch unterscheiden, daß sie mit unterschiedlicher Rührgeschwindigkeit vermischt werden, und zwar mit 100 bzw. 1000 U/min.

| Temperatur in °C | Vermischung U/min | Ablauf in cm |
|---|---|---|
| 25 | 100 | >15 |
| 25 | 1000 | >15 |
| 80 | 100 | 10-11,5 |
| 80 | 1000 | >15 |
| 130 | 100 | 0,3-0,6 |
| 130 | 1000 | 3,8-4,5 |

Das Ablaufen des Reaktionsharzes auf den Blechen ist als Maß für dessen Benetzungsvermögen anzusehen. Durch Vergrößerung der Rührgeschwindigkeit auf 1000 U/min kann nach den Angaben in der Tabelle der Viskositätsabbau erhöht werden.

### B) Gemisch aus Reaktionsharz und Kies/Sand-Gemisch

Kies/Sand-Gemisch und Isocyanat/Polyol-Reaktionsharz (Mischungsverhältnis 16:1) werden mit einem Schneckenmischer vermischt und in eine Produktionsform von 1 m Höhe bei 25 und 80 °C Formtemperatur gegeben, so läuft das Isocyanat/Polyol-Reaktionsharz im oberen Teil der Form stark ab. Aus den ausgehärteten Filterrohren können am oberen Ende von Hand leicht Teile herausgebrochen werden. In der unteren Hälfte dieser Rohre ist die Harzmenge dagegen wesentlich größer und die Wasserdurchflußrate des unteren Drittels des Rohres ist praktisch 0 m³/min · m².

Im Unterschied zu diesen 2 Versuchen läßt sich bei 130 °C in 10 Minuten ein Filterrohr mit nahezu gleichmäßiger Harzverteilung über die gesamt Rohrhöhe herstellen.

### Beispiel 3

### Variation des Suspendierhilfsmittels

Bei zwei Vergleichsversuchen mit Reaktionsharzen wie in Beispiel 2 A, in denen die Hälfte bzw. die Gesamtmenge des Aerosils 150 durch Kalksteinmehl ersetzt wurde, läuft das mit dem Rakel aufgetragene Reaktionsharz mehr als 15 cm im Temperaturbereich zwischen 25 und 130 °C ab. Die Viskositätsabnahme durch Vermischung und Temperaturerhöhung kann durch die fortschreitende chemische Reaktion allein nicht in dem Maße kompensiert werden, wie es Reaktion und Aerosil in Kombination verrichten. Werden dagegen 0,5 % Kalksteinmehl durch Aerosil ersetzt, so ist bei 130 °C kein Ablaufen des Reaktionsharzes zu beobachten.

Sowohl mit Aerosilmengen unter als auch über 2 % sind in der Produktionsanlage keine brauchbaren Filterrohre herstellbar. Im ersten Fall unterscheidet sich die Verteilung des Reaktionsharzes im Filter sehr stark. Geringe Mengen im oberen und große im unteren Teil führen zu unterschiedlichen Festigkeiten und Wasserdurchtrittsraten. Im zweiten Fall hat der Filter keine Festigkeit. Wegen des fehlenden Fließverhaltens konnten sich die Haftstellen zwischen den einzelnen Partikeln nur schlecht ausbilden.

### Beispiel 4

### Variation der Katalysatorkonzentration

Die angegebene Harzkomponente (s. Beispiel 2 A) wird mit Katalysatormengen (Dibutylzinndilaurat von 0,015, 0,018 und 0,023 % hergestellt und im Ablaufverhalten mit der ursprünglichen Rezeptur mit 0,020 % Katalysatormenge verglichen. Die Rührgeschwindigkeit beim Vermischen von Isocyanat und Polyol beträgt 100 U/min. Nach der in Beispiel 2 A angegebenen Meßmethode wurden folgende Ablaufwerte (in cm) erhalten:

| Katalysatormenge [%] Temp. | 0,015 | 0,018 | 0,020 | 0,023 |
|---|---|---|---|---|
| 80 °C | >15 | >15 | >15 | >15 |
| 130 °C | 13,5-14,5 | 6,9-9 | 0,6-0,3 | 0,0 |

Bei 130 °C Formentemperatur wurden mit den Systemen im 0,018 und 0,023 % Katalysator Filterrohre produziert.
Bei 0,018 % Katalysator sind deutliche Verteilungsunterschiede des Reaktionsharzes festzustellen. Auffällig ist besonders die große Harzmenge in den unteren 20 cm des Filterrohres. Mit 0,023 Katalysator wird zwar eine gleichmäßige Verteilung des Reaktionsharzes erzielt. Die Festigkeit des Rohres ist jedoch sehr gering. Beim Entformen brachen schon Teile aus. Untersuchungen der Struktur des Filterrohres zeigen, daß sich die Haftstellen zwischen den einzelnen Kiespartikeln nur schlecht ausgebildet haben. Die Viskosität des Systems war zum Zeitpunkt der vollständigen Füllung der Form zu stark angewachsen.

Für die Praxis der Filterrohrherstellung wurden Härtungstemperatur und Suspendierhilfsmittel sowie Katalysatorkonzentration den vorgegebenen Mischungsverhältnissen im Schneckenmischer angepaßt. Der
Viskositätsabbau bei Vermischen von Reaktionsharz und Kies/Sand-Gemisch mit einer Schnecke in der Produktionsanlage wird durch Rühren des Reaktionsharzes mit einer Geschwindigkeit von 100 U/min im Labor simuliert.
Der Vergleich der Laborversuche mit der Filterrohrherstellung an der Produktionsanlage zeigt, daß ein definiertes Ablaufverhalten des Systems für die Herstellung von Filterrohren mit gleichmäßiger Festigkeitsverteilung erforderlich ist. Bei der angewendeten Auftragsvariante bei den Laborversuchen ist dies ein Ablaufen von 0,3 - 0,6 cm bei 130 °C.

Die Beispiele zeigen, daß bei einer gegebenen Zusammensetzung an Polyolen, Polyisocyanaten und Additiven die Konzentration des Katalysators und des Suspendierhilfsmittels nur in sehr engen Bereichen varriert werden darf, wenn das PU im Endprodukt gleichmäßig verteilt sein soll. Dieser kleine Bereich läßt sich mit wenigen Routine-Versuchen für den konkreten Fall ermitteln. Es war ein glücklicher Umstand, diese Bedingungen zu ermitteln, denn es war nicht zu erwarten, solch stark unterschiedliches Viskositätsverhalten aufgrund der sprunghaften Änderungen der Temperatur und der Scherung realisieren zu können.

## Patentansprüche

1. Isocyanat/Polyol-Reaktionsharz auf der Basis folgender Komponenten:
a) Polyol,
b) Polyisocyanat,
c) Katalysator,
d) bis zu 10 Gew.-%, bezogen auf das Polyol an Suspendierhilfsmittel und
e) bis zu 10 Gew.-% eines Mittels zur Bindung von Wasser, bezogen auf das Polyol,
dadurch gekennzeichnet, daß der Katalysator und das Suspendierhilfsmittel in solcher Konzentration im Reaktionsharz enthalten sind, daß es unmittelbar nach dem Vermischen innerhalb von 10 Min.
a) bei 25 °C um mindestens 15 cm und
b) bei 130 °C um 3 bis 0,3 cm nach unten fließt,
wenn man das Isocyanat/Polyol-Reaktionsharz nach Vermischung sofort mit einem Rakel als 10 cm langen rechteckigen Streifen mit einer Höhe von 1 mm und einer Breite von 1 cm auf ein entfettetes Stahlblech aufbringt, welches auf die Aushärtungstemperatur vortemperiert wurde, und wenn man unmittelbar nach Auftrag die Probe senkrecht in einen Trockenschrank stellt, so daß der Reaktionsharzstreifen sich in waagerechter Lage befindet.

2. Isocyanat/Polyol-Reaktionsharz nach Anspruch 1, gekennzeichnet durch einen Isocyanat-Überschuß von bis zu 50 %, bezogen auf reaktive Hydroxylgruppen.

3. Isocyanat/Polyol-Reaktionsharz nach Anspruch 1 oder 2, gekennzeichnet durch zinnorganische Katalysatoren mit einem Molekulargewicht von mehr als 250.

4. Isocyanat/Polyol-Reaktionsharz nach Anspruch 1, 2 oder 3, gekennzeichnet durch Suspendierhilfsmittel, die Silicium enthalten.

5. Isocyanat/Polyol-Reaktionsharz nach Anspruch 1 bis 4, gekennzeichnet durch Bentonite und hochdisperse Kieselsäure als Suspendiermittel.

6. Verwendung des Isocyanat/Polyol-Rektionsharzes nach mindestens einem der Ansprüche 1 bis 5 als Bindemittel für körnige Materialien zur Herstellung von offenporigen Formteilen mit einem Porenvolumen von vorzugsweise 30 bis 50 Vol.-%.

7. Verwendung nach Anspruch 6, dadurch gekennzeichnet, daß das körnige Material Kies oder Sand oder ein Kies/Sandgemisch ist.

8. Verwendung nach Anspruch 7, dadurch gekennzeichnet, daß das körnige Material einen Staubanteil hat.

9. Verwendung nach Anspruch 6, dadurch gekennzeichnet, daß das körnige Material bis zu 10 Gew.-% an Körnern mit einem Durchmesser von weniger als 1,0 mm hat.

10. Verwendung nach einem der vorhergehenden Ansprüche, dadurch gekennzeichnet, daß das körnige Material mit der Polyolkomponente bzw. dem daraus hergestellten Harz vorbehandelt ist.

## Claims

1. An isocyanate/polyol casting resin based on the following components:
a) polyol,
b) polyisocyanate,
c) catalyst,
d) up to 10% by weight, based on the polyol, of suspension aid and
e) up to 10% by weight, based on the polyol, of a water-binding agent,
characterized in that the catalyst and the suspension aid are present in the casting resin in such concentrations that, within 10 minutes of mixing, it flows downwards
a) by at least 15 cm at 25°C and
b) by 3 to 0.3 cm at 130°C
if, immediately after mixing, the isocyanate/polyol casting resin is knife-coated onto a degreased steel plate preheated to the curing temperature in the form of a 10 cm long rectangular strip 1 mm thick and 1 cm wide and, immediately after application of the resin, the test specimen is placed vertically in a drying cabinet so that the strip of casting resin is horizontally positioned.

2. An isocyanate/polyol casting resin as claimed in claim 1, characterized by an isocyanate excess of up to 50%, based on reactive hydroxyl groups.

3. An isocyanate/polyol casting resin as claimed in claim 1 or 2, characterized by organotin catalysts with a molecular weight of more than 250.

4. An isocyanate/polyol casting resin as claimed in claim 1, 2 or 3, characterized by suspension aids containing silicon.

5. An isocyanate/polyol casting resin as claimed in claims 1 to 4, characterized by Bentonites and highly disperse silica as suspension aids.

6. The use of the isocyanate/polyol casting resin claimed in at least one of claims 1 to 5 as a binder for granular materials for the production of open-cell moldings with a cell volume of 30 to 50% by volume.

7. The use claimed in claim 6, characterized in that the granular material is gravel or sand or a gravel/sand mixture.

8. The use claimed in claim 7, characterized in that the granular material has a dust component.

9. The use claimed in claim 6, characterized in that up to 10% by weight of the granular material is smaller than 1.0 mm in diameter.

10. The use claimed in any of the preceding claims, characterized in that the granular material is pretreated with the polyol component or with the resin produced therefrom.

## Revendications

1. Résine composite isocyanate/polyol à base des composants suivants :
a) polyol
b) polyisocyanate
c) catalyseur
d) jusqu'à 10 % en poids rapporté au polyol en adjuvant de mise en suspension, et
e) jusqu'à 10 % en poids d'un agent pour se lier à l'eau rapporté au polyol,
caractérisé en ce que
le catalyseur et l'adjuvant d'agent de mise en suspension sont contenus à une telle concentration dans la résine composite qu'elle coule immédiatement après le melange en l'espace de 10 minutes.
a) à 25°C d'au moins 15 cm et,
b) à 130°C de 3 à 0,3 cm vers le bas
lorsqu'on applique la résine composite isocyanate/polyol avec une raclette sous forme de bandes de 10 cm de long rectangulaires avec une hauteur de 1 mm et une largeur de 1 cm sur une tôle d'acier dégraissée qui avait été stabilisée à la température de durcissement et lorsqu'on place, immédiatement après l'application, l'échantillon verticalement dans une étuve, de façon que les bandes de résine composite se trouvent en position horizontale.

2. Résine composite isocyanate/polyol, selon la revendication 1,
caractérisée par
un excès d'isocyanate de jusqu'à 50 % rapporté aux groupes hydroxy réactifs.

3. Résine composite isocyanate/polyol selon la revendication 1 ou 2,
caractérisée par
des catalyseurs organo-stanniques ayant un poids moléculaire de plus de 250.

4. Résine composite isocyanate/polyol selon la revendication 1, 2 ou 3,
caractérisée par
des adjuvants de mise en suspension qui contiennent du silicium.

5. Résine composite isocyanate/polyol selon la revendication 1 à 4,
caractérisée par
de la bentonite et de l'acide silicique hautement dispersé comme agent de mise en suspension.

6. Utilisation de la résine composite isocyanate/polyol selon au moins une des revendications 1 à 5, comme agent liane pour des matériaux en grain en vue de la production de pièces moulées à pores ouverts ayant un volume de pores, de - de préférence - 30 à 50 % en volume.

7. Utilisation selon la revendication 6,
caractérisée en ce que
le matériau en grain est du gravier ou du sable ou un mélange gravier/sable.

8. Utilisation selon la revendication 7,
caractérisée en ce que
le matériau en grain contient une partie en poussière.

9. Utilisation selon la revendication 6,
caractérisée en ce que
le matériau en grain a jusqu'à 10 % en poids de grains avec un diamètre de moins de 1,0 mm.

10. Utilisation selon l'une des revendications précédentes,
caractérisée en ce que
le matériau en grain est prétraité par le composant polyol ou par la résine obtenue à partir de celui-ci.
